# EUROPÄISCHE PATENTSCHRIFT

(11) **EP 3 770 387 B1**
(45) Veröffentlichungstag und Bekanntmachung des Hinweises auf die Patenterteilung: **27.11.2024**
(21) Anmeldenummer: 20187247.0
(22) Anmeldetag: 22.07.2020
(51) Int. Cl.: F01N 3/20, B60K 15/073, B60K 15/063, B62D 35/00

(54) **KRAFTFAHRZEUG MIT TANK**
MOTOR VEHICLE WITH TANK
VÉHICULE AUTOMOBILE DOTÉ D'UN RÉSERVOIR

(30) Priorität: 26.07.2019 DE 102019005278
(43) Veröffentlichungstag der Anmeldung: 27.01.2021
(73) Patentinhaber: MAN Truck & Bus SE, 80995 München (DE)
(72) Erfinder: Menzel, Dirk, 80995 München (DE); Albertshofer, Günter, 80995 München (DE)
(74) Vertreter: v. Bezold & Partner Patentanwälte - PartG mbB

(56) Entgegenhaltungen:
- DE-A1- 102011 103 989
- DE-A1- 102016 005 068
- DE-A1- 102016 012 630
- DE-U1- 29 509 092
- US-A- 5 054 799
- US-A1- 2009 250 970
- US-B1- 6 340 191

## Beschreibung

Die Erfindung betrifft ein Kraftfahrzeug mit einem Tank, vorzugsweise einem Reduktionsmitteltank.

Kraftfahrzeuge, wie z. B. Lastkraftwagen, können eine Brennkraftmaschine aufweisen, deren Abgase in einer Abgasnachbehandlungsvorrichtung des Kraftfahrzeugs behandelt werden können, bevor sie von einem Auspuff des Kraftfahrzeugs abgegeben werden. Die Abgasnachbehandlung kann bspw. ein System aus Oxidationskatalysator und Katalysator zur selektiven katalytischen Reduktion (engl. SCR) aufweisen. Zur Reduzierung von Stickoxiden kann ein Reduktionsmittel, z. B. eine wässrige Harnstofflösung, in das Abgas eingespritzt werden. Das Reduktionsmittel kann in separaten, fest am Kraftfahrzeug montierten Tanks mitgeführt werden. Dabei wird versucht, mindestens ein Verhältnis von 1:10 zwischen Kraftstoffvolumen und Reduktionsmittelvolumen einzuhalten. Strengere Abgasemissionsvorschriften (z. B. Euro 6d, 6e, 7) können dazu führen, dass größere Mengen an Reduktionsmittel mitgeführt werden müssen. Jedoch kann der vorhandene Bauraum für den Reduktionsmitteltank begrenzt sein und eine Vergrößerung in Abhängigkeit von einer Größe und Anordnung anderer Komponenten des Kraftfahrzeugs nicht ohne weiteres zulassen. Eine Lösung besteht darin, eine Größe des Kraftstoffstanks zu verringern, um Bauraum für eine Vergrößerung des Reduktionsmitteltanks zu schaffen. Allerdings wird dadurch eine Reichweite des Kraftfahrzeugs beeinträchtigt.

Eine weitere Lösung kann in einer Neupositionierung des Reduktionsmitteltanks bestehen, wobei die Neupositionierung ein vergrößertes Volumen für den Reduktionsmitteltank erlaubt.

Die DE 10 2014 017 732 A1 offenbart eine Zugmaschine, die ein Fahrerhaus und zwei seitliche Windabweiser, die relativ zur Fahrerhaus-Rückwand nach hinten abstehen, aufweist. Die Zugmaschine zeichnet sich dadurch aus, dass zwischen den Windabweisern zumindest ein Fluidtank zur Aufnahme eines Fluides angeordnet ist.

Dokument DE 10 2016 012 630 A1 offenbart ein Zugfahrzeug, umfassend einen Rahmen und ein am Rahmen angeordnetes Fahrerhaus. Wenigstens ein Behälter für Luft, Gas oder Flüssigkeit ist an der Oberseite des Rahmens zwischen der Rückwand des Fahrerhauses und der Kupplungsvorrichtung angeordnet. Der Behälter ist ausgebildet, sich unter einer vorderen Unterseite des angekoppelten Anhängers zu erstrecken.

Dokument DE 10 2011 103 989 A1 offenbart eine Anordnung eines Betriebsstofftanks an einem Kraftfahrzeug mit Mitteln zur gemeinsamen Befestigung des Betriebsstofftanks mit weiteren Fahrzeugkomponenten an einem Fahrzeugchassis oder an einem Fahrgestellrahmen. Der Betriebsstofftank ist in eine zentrale Betriebsstoffversorgungseinheit integriert und mit dieser mit den Mitteln zur Befestigung am Fahrzeugchassis oder am Fahrgestellrahmen befestigt.

Dokument DE 295 09 092 U1 offenbart eine Anbauvorrichtung für Sattelzugmaschinen, wobei hinter dem Führerhaus eine anbring- und wieder demontierbare Arbeitsplattform vorgesehen ist, die sich im Wesentlichen im Bereich zwischen der Rückseite des Führerhauses und der Sattelkupplung erstreckt, und die dabei aus einem an dem Fahrzeugrahmen der Sattelzugmaschine zumindest mittelbar verankerbaren Anbaurahmen besteht, auf welchem eine begehbare Abdeckung zumindest mittelbar verankert ist.

Dokument US 2009/250970 A1 offenbart eine Kabine für ein Zugfahrzeug, mit Seitenverkleidungen, die Verlängerungen der Seitenwände der Kabine in rückwärtiger Richtung bilden und verschwenkbar sind, um Zugang zum Fahrgestellraum hinter dem Fahrerhaus zu ermöglichen. An der Innenseite einer Seitenverkleidung ist ferner eine Stufenanordnung angebracht.

Dokument US 5 054 799 A offenbart eine Baugruppe zum Anbringen einer Fahrerhausschürzenverkleidung über dem Kraftstofftankbereich eines Lastkraftwagens. Die Verkleidung ist am vorderen Ende des Kraftstofftanks an einer Kabinenstufe und am hinteren Ende des Kraftstofftanks an einer Stufenanordnung befestigt.

Dokument US 6 340 191 B1 offenbart eine Lastkraftwagen-Aufbewahrungsbox mit einer Zugangstür, wobei auf die Zugangstür ein aerodynamisches Karosserieblech montiert ist. Die Aufbewahrungsbox kann am Chassis zwischen Vorder- und Hinterachse des Lastkraftwagens befestigt werden. Die Zugangstür kann ferner eine oder mehrere Stufen umfassen, die von einem Fahrer zum Ein- und Aussteigen aus der Kabine verwendet werden können.

Der Erfindung liegt die Aufgabe zu Grunde, ein Kraftfahrzeug mit alternativer und/oder verbesserter Anordnung und Konfiguration eines Tanks, vorzugsweise eines Reduktionsmitteltanks, zu schaffen.

Die Aufgabe wird gelöst durch die Merkmale des unabhängigen Anspruchs 1. Vorteilhafte Weiterbildungen sind in den abhängigen Ansprüchen und der Beschreibung angegeben.

Die Erfindung schafft ein Kraftfahrzeug, vorzugsweise ein Nutzfahrzeug, besonders bevorzugt einen Lastkraftwagen (z. B. Sattelzugmaschine oder Hängerzugmaschine). Das Kraftfahrzeug weist einen Fahrzeugrahmen (z. B. ausgebildet als ein Leiterrahmen) und ein Fahrerhaus (bzw. eine Fahrerkabine) auf. Das Kraftfahrzeug weist eine (z. B. begehbare) Arbeitsplattform auf, die fahrerhausrückseitig oberhalb des Fahrzeugrahmens angeordnet ist. Das Kraftfahrzeug weist einen Tank, vorzugweise einen Reduktionsmitteltank, auf, der (z. B. zumindest teilweise oder im Wesentlichen vollständig) zwischen der Arbeitsplattform und dem Fahrzeugrahmen angeordnet ist, insbesondere bezüglich einer Vertikalrichtung.

Der Tank kann vorteilhaft als ein Reduktionsmitteltank zum Bevorraten von Reduktionsmittel (z. B. wässrige Harnstofflösung) für eine Abgasnachbehandlungsvorrichtung ausgeführt sein. Herkömmlich ist zwischen der Arbeitsplattform und dem Fahrzeugrahmen kein Bauraum vorhanden, da die Arbeitsplattform direkt oberhalb des Fahrzeugrahmens angeordnet ist. Das vertikale Versetzen der Arbeitsplattform nach oben (z. B. um ca. 10 cm), sodass sich zusätzlicher Bauraum zwischen der Arbeitsplattform und dem Fahrzeugrahmen ergibt, kann ein relativ großes Volumen für den Tank ermöglichen. Bei einer Größe der Arbeitsplattform von ca. 40 cm x 160 cm kann so bspw. zusätzlicher Bauraum für einen ca. 65-Liter-Tank geschaffen werden. Durch die Nutzung dieses zusätzlichen Bauraums unter der Arbeitsplattform wird kein zusätzlicher Bauraum für den Tank z. B. seitlich am Rahmen verbraucht, der wiederum für einen Kraftstofftank oder andere notwendige oder optionale Bauteile genutzt werden kann. Die Nutzbarkeit des Kraftfahrzeugs wird so weiter optimiert.

In einem Ausführungsbeispiel ist der Tank fahrerhausrückseitig und/oder oberhalb von dem Fahrzeugrahmen angeordnet.

Zweckmäßig kann der Tank eine abgeflachte Form aufweisen und/oder horizontal ausgerichtet sein.

In einem weiteren Ausführungsbeispiel ist der Tank (z. B. zumindest teilweise oder im Wesentlichen vollständig) zwischen einer Unterseite der Arbeitsplattform und einer Oberseite des Fahrzeugrahmens angeordnet, insbesondere bezüglich einer Vertikalrichtung.

Zweckmäßig kann der Tank und/oder die Arbeitsplattform direkt hinter dem Fahrerhaus angeordnet sein.

Bspw. kann der Tank und/oder die Arbeitsplattform ungefähr auf Radhöhe des Kraftfahrzeugs angeordnet sein.

Der Tank ist elastisch auf dem Fahrzeugrahmen abgestützt oder liegt elastisch auf dem Fahrzeugrahmen auf, vorzugsweise mittels Gummipuffer. Die elastische Lagerung kann ermöglichen, dass eine träge Flüssigkeit in dem Tank zumindest teilweise von einer Bewegung des Fahrzeugrahmens entkoppelt werden kann.

In einer Ausführungsform ist der Tank an der Arbeitsplattform, vorzugsweise von unten und/oder seitlich an einer Trittstufe der Arbeitsplattform, und/oder dem Fahrzeugrahmen, vorzugsweise von oben, angebracht (z. B. verschraubt und/oder aufgesteckt).

In einer weiteren Ausführungsform ist eine (z. B. quaderförmige) Form des Tanks an eine (z. B. rechteckförmige) Form der Arbeitsplattform angepasst.

In einer weiteren Ausführungsform deckt die Arbeitsplattform den Tank ab, vorzugsweise größtenteils (z. B. zu mehr als 50 %), im Wesentlichen (z. B. zu mindestens 80 % oder 90 %) oder vollständig. Damit kann der Tank von der Arbeitsplattform geschützt werden und eine Breite und/oder Länge (ein Volumen) des Tanks möglichst groß vorgesehen werden.

In einer Ausführungsvariante ist die Arbeitsplattform an dem Fahrzeugrahmen abgestützt, vorzugsweise direkt, mittels mindestens eines Schraubdoms und/oder ohne Zwischenschaltung eines Hohlraums des Tanks. Damit kann bspw. verhindert werden, dass bei Begehung der Arbeitsplattform die entsprechende Belastung auf den Tank einwirkt. Der Tank muss somit nicht derart aufwendig konstruiert werden, um derartigen Belastungen zu widerstehen.

Der Tank weist mindestens eine Ausnehmung, vorzugsweise ein Durchgangsloch oder einen Domabschnitt, auf, durch die hindurch die Arbeitsplattform an dem Fahrzeugrahmen abgestützt ist, z. B. mittels mindestens eines Schraubdoms in der Ausnehmung.

In einem Ausführungsbeispiel weist der Tank ein Volumen in einem Bereich zwischen 40 I und 100 I, vorzugweise zwischen 50 I und 90 I, besonders bevorzugt zwischen 60 I und 80 I, auf. Alternativ oder zusätzlich, weist der Tank in einem Abschnitt zwischen der Arbeitsplattform und dem Fahrzeugrahmen eine Höhe in einem Bereich zwischen 5 cm und 20 cm, vorzugsweise zwischen 7 cm und 15 cm, besonders bevorzugt rund 10 cm, auf. Damit kann einerseits genügend Volumen für das Reduktionsmittel bereitgestellt werden. Andererseits ist die vertikale Versetzung der Arbeitsplattform nicht wesentlich.

In einem weiteren Ausführungsbeispiel weist die Arbeitsplattform eine im Westlichen rechteckförmige Form auf (z. B. Breite (40 cm ± 10 cm) * Länge (160 cm ± 40 cm)), ist begehbar und/oder ist horizontal ausgerichtet.

Zweckmäßig kann die Arbeitsplattform durch eine an der Arbeitsplattform montierte Trittleiter erreicht werden.

In einer Ausführungsform ist der Tank bezüglich einer Querrichtung des Kraftfahrzeugs (z. B. nur) mittig (z. B. hinter dem Fahrerhaus) angeordnet. Alternativ kann der Tank bezüglich einer Querrichtung des Kraftfahrzeugs bspw. mittig und außenseitig (z. B. hinter dem Fahrerhaus) angeordnet sein.

In einer weiteren Ausführungsform steht der Tank an einer dem Fahrerhaus zugewandten Seite des Tanks über die Arbeitsplattform über. Durch den überstehenden Bereich kann bspw. ein Volumen des Tanks vergrößert sein. Bspw. kann der überstehende Bereich auch erweitert sein (z. B. in einer Vertikalrichtung nach oben), um bspw. Bauraum für eine Pumpe im Tank zu schaffen. Alternativ oder zusätzlich kann der Tank bspw. entgegen einer Vorwärtsfahrrichtung des Kraftfahrzeugs im Wesentlichen bündig mit der Arbeitsplattform abschließen.

In einer Ausführungsvariante kann der Tank zumindest einseitig bezüglich einer Querrichtung des Kraftfahrzeugs im Wesentlichen bündig mit dem Fahrzeugrahmen und/oder der Arbeitsplattform abschließen. So kann bspw. eine für das Fluid im Tank bspw. schädliche Wärmeübertragung von einer Abgasnachbehandlungsvorrichtung des Kraftfahrzeugs, die an dieser Seite des Fahrzeugrahmens angeordnet sein kann, verhindert oder zumindest verringert werden.

In einer Ausführungsvariante steht der Tank zumindest einseitig bezüglich einer Querrichtung des Kraftfahrzeugs über den Fahrzeugrahmen über. Damit kann bspw. ein Volumen des Tanks vergrößert werden.

In einer Ausführungsvariante erstreckt sich ein (z. B. quaderförmiger) Bereich des Tanks bezüglich einer Vertikalrichtung nach oben über die Arbeitsplattform hinaus, vorzugsweise an einer dem Fahrerhaus zugewandten Seite des Tanks bzw. der Arbeitsplattform. Alternativ oder zusätzlich kann sich ein Bereich des Tanks bezüglich einer Vertikalrichtung nach unten über eine Oberseite des Fahrzeugrahmens hinaus erstrecken, vorzugsweise zwischen Längsträgern des Fahrzeugrahmens (z. B. einseitig entlang eines Längsträger oder zweiseitig entlang beider Längsträger).

In einer Weiterbildung ist in dem Bereich des Tanks zumindest teilweise eine Pumpe aufgenommen.

In einem Ausführungsbeispiel weist der Tank einen L-förmigen Querschnitt auf (z. B. in einer Vertikalschnittebene parallel zu einer Fahrzeuglängsachse des Kraftfahrzeugs), wobei vorzugsweise der kurze Schenkel der L-Form dem Fahrerhaus zugewandt ist und/oder der lange Schenkel der L-Form zwischen der Arbeitsplattform und dem Fahrzeugrahmen angeordnet ist. Der L-förmige Querschnitt kann eine möglichst optimale Ausnutzung des Bauraums ermöglichen, um ein großes Volumen des Tanks zu schaffen.

In einem weiteren Ausführungsbeispiel weist das Kraftfahrzeug ferner mindestens einen, vorzugsweise elektrischen, hydraulischen oder pneumatischen, Anschluss (z. B. Versorgungsanschluss), auf, der vorzugsweise fahrerhausrückseitig angeordnet und/oder mittels der Arbeitsplattform zugängig ist. Der mindestens eine Anschluss kann bspw. an der Fahrerhausrückwand und/oder z. B. an einem Frontbereich des Sattelaufliegers oder Anhängers vorgesehen sein.

In einem weiteren Ausführungsbeispiel weist das Kraftfahrzeug ferner eine Abgasnachbehandlungsvorrichtung, vorzugsweise aufweisend eine SCR-Abgasnachbehandlungsvorrichtung, auf, wobei der Tank in Fluidverbindung mit der Abgasnachbehandlungsvorrichtung steht, vorzugsweise zum Zuführen von Reduktionsmittel.

Es ist möglich, dass zwischen dem Tank und der Abgasnachbehandlungsvorrichtung eine thermische Isolierung, zum Beispiel eine Wärmedämmung, angeordnet ist.

Die zuvor beschriebenen bevorzugten Ausführungsformen und Merkmale der Erfindung sind beliebig miteinander kombinierbar. Weitere Einzelheiten und Vorteile der Erfindung werden im Folgenden unter Bezug auf die beigefügten Zeichnungen beschrieben. Es zeigen:
- Figur 1: eine perspektivische Ansicht eines schematisch dargestellten Kraftfahrzeugs gemäß einem Ausführungsbeispiel der vorliegenden Offenbarung;
- Figur 2: eine vergrößerte Ansicht eines Ausschnitts aus Figur 1;
- Figur 3: eine Seitenansicht des beispielhaften Kraftfahrzeugs;
- Figur 4: eine Rückansicht des beispielhaften Kraftfahrzeugs;
- Figur 5: eine perspektivische Ansicht eines schematisch dargestellten Kraftfahrzeugs gemäß einem weiteren Ausführungsbeispiel der vorliegenden Offenbarung;
- Figur 6: eine vergrößerte Ansicht eines Ausschnitts aus Figur 5;
- Figur 7: eine Seitenansicht des weiteren beispielhaften Kraftfahrzeugs; und
- Figur 8: eine Rückansicht des weiteren beispielhaften Kraftfahrzeugs.

Die in den Figuren gezeigten Ausführungsformen stimmen zumindest teilweise überein, so dass ähnliche oder identische Teile mit den gleichen Bezugszeichen versehen sind und zu deren Erläuterung auch auf die Beschreibung der anderen Ausführungsformen bzw. Figuren verwiesen wird, um Wiederholungen zu vermeiden.

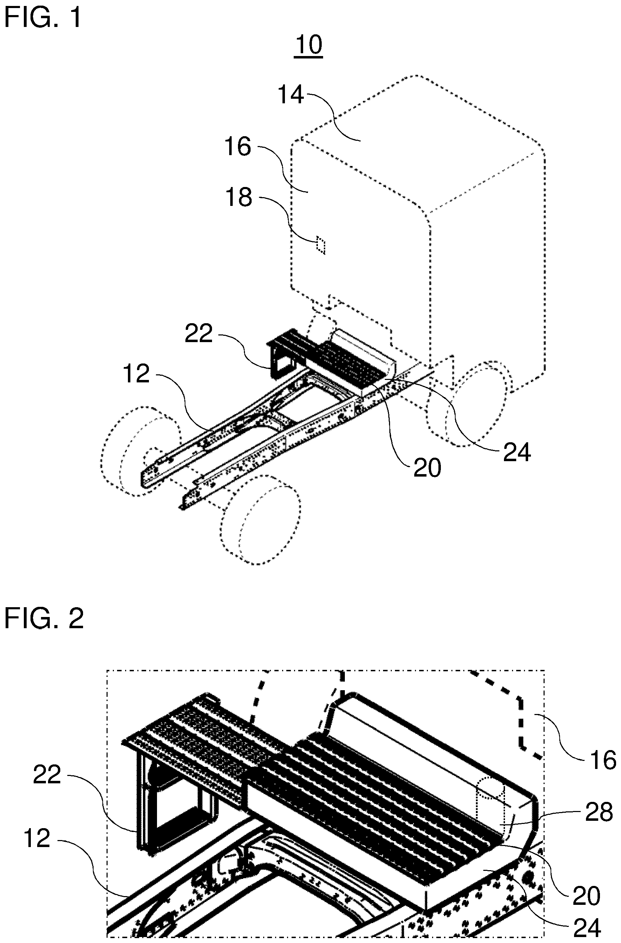

Die Figuren 1 bis 4 zeigen ein Kraftfahrzeug 10. Das Kraftfahrzeug 10 ist als ein Nutzfahrzeug, insbesondere ein Lastkraftwagen, ausgebildet. Der Lastkraftwagen kann bspw. als eine Sattelzugmaschine ausgeführt sein. Bspw. kann ein Führungszapfen (King-Pin) eines Sattelaufliegers an eine Sattelplatte (nicht dargestellt) der Sattelzugmaschine angekoppelt werden. Der Der Lastkraftwagen kann bspw. auch als eine Hängerzugmaschine ausgeführt sein. Die Hängerzugmaschine kann eine Anhängerkupplung aufweisen, an die ein Anhänger ankoppelbar ist. Es versteht sich, dass der dargestellte und beschriebene Lastkraftwagen rein beispielhaft ist. Die hierin offenbarten Techniken können auch bei anderen Kraftfahrzeugen, vorzugsweise Nutzfahrzeugen, anwendbar sein.

Das Kraftfahrzeug 10 ist zweckmäßig durch eine Brennkraftmaschine, z. B. Diesel-, Benzin und/oder Gas-Brennkraftmaschine, angetrieben. Die Brennkraftmaschine kann Abgas erzeugen, das in einer Abgasnachbehandlungsvorrichtung des Kraftfahrzeugs 10 behandelt werden kann.

Das Kraftfahrzeug 10 weist einen Fahrzeugrahmen 12 und ein Fahrerhaus (Führerhaus oder Fahrerkabine) 14 auf.

Der Fahrzeugrahmen 12 ist zweckmäßig als ein Leiterrahmen ausgeführt. Der Fahrzeugrahmen 12 weist zwei parallele Längsträger auf. Die Längsträger sind mittels mehrerer Querträger miteinander verbunden. Der Fahrzeugrahmen 12 ist auf mindestens einer Vorderachse und mindestens einer Hinterachse des Kraftfahrzeugs 10 abgestützt. Der Fahrzeugrahmen 12 trägt das Fahrerhaus 14 und weitere Komponenten des Kraftfahrzeugs 10, z. B. die Brennkraftmaschine, ein Getriebe, Tanks usw.

Das Fahrerhaus 14 bietet einen Fahrerarbeitsplatz zum Führen des Kraftfahrzeugs 10. Das Fahrerhaus 14 ist auf den Fahrzeugrahmen 12 abgestützt. Das Fahrerhaus 14 kann kippbar sein, um bspw. Zugang zu der Brennkraftmaschine für Wartungsarbeiten usw. zu erlangen. Das Fahrerhaus 14 kann, wie dargestellt, als Frontlenker ausgeführt sein. Eine Ausführung als Langhauber oder Kurzhauber ist auch möglich.

An einer Rückwand 16 des Fahrerhauses 14 kann mindestens ein Anschluss 18 (nur schematisch in den Figuren angedeutet) angeordnet sein. Der Anschluss 18 kann bspw. ein elektrischer Versorgungsanschluss zum Bereitstellen von elektrischer Energie oder eine Kommunikationsanschluss als Datenschnittstelle sein. Der Anschluss 18 kann bspw. auch ein zweckmäßig pneumatischer oder hydraulischer Medienversorgungsanschluss sein, z. B. zum Bereitstellen von Druckluft oder Hydraulikfluid. An den mindestens einen Anschluss 18 kann mindestens eine Leitung angeschlossen werden, um bspw. einen entsprechenden Anschluss am Sattelauflieger oder Anhänger mit dem Anschluss 18 zu verbinden. So kann bspw. eine pneumatische Bremsvorrichtung des Sattelaufliegers oder des Anhängers mit Druckluft versorgt werden usw.

Um Zugang zu dem mindestens einen Anschluss 18 (bzw. zu den Gegenanschlüssen an dem Sattelauflieger oder Anhänger) zu erlangen, ist eine Arbeitsplattform (Aufstiegsfläche) 20 vorgesehen. Die Arbeitsplattform 20 ist fahrerhausrückseitig direkt hinter der Rückwand 16 des Fahrerhauses 14 angeordnet. Die Arbeitsplattform 20 ist im Bereich des Fahrzeugrahmens 12, z. B. ungefähr auf Radhöhe des Kraftfahrzeugs 10, angeordnet. Die Arbeitsplattform 20 ist oberhalb des Fahrzeugrahmens 12 angeordnet und zweckmäßig auf diesem abgestützt. Die Arbeitsplattform 20 ist begehbar. Die Arbeitsplattform 20 ist horizontal ausgerichtet. An einer Endseite der Arbeitsplattform 20 ist eine Trittleiter 22 angeordnet, vorzugsweise angebracht. Die Trittleiter 22 erleichtert einen Aufstieg auf die Arbeitsplattform 20. Die Arbeitsplattform kann eine im Westlichen rechteckförmige Form aufweisen, z. B. mit einer Breite von 40 cm ± 10 cm und/oder einer Länge von 160 cm ± 40 cm. Die Arbeitsplattform kann eine Ebene oder mehrere, zum Beispiel mit einer Stufe verbundene, Ebenen aufweisen.

Herkömmlich ist die Arbeitsplattform 20 direkt oberhalb des Fahrzeugrahmens 12 angeordnet. Im Gegensatz zu dieser herkömmlichen Technik wird hierin vorgeschlagen, die Arbeitsplattform 20 in einer Vertikalrichtung nach oben um ein bestimmtes Maß zu versetzen, z. B. um 5 cm bis 20 cm, vorzugsweise rund 10 cm. Im dem zwischen einer Unterseite der Arbeitsplattform 20 und einer Oberseite des Fahrzeugrahmens 12 freiwerdenden Raum kann ein Tank 24 zumindest teilweise angeordnet werden.

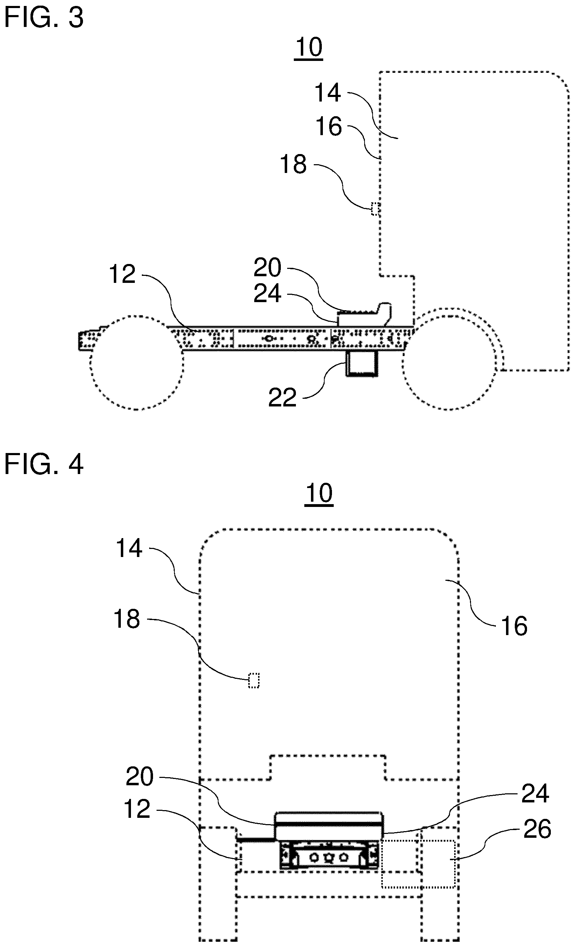

Der Tank 24 ist bevorzugt als ein Reduktionsmitteltank zum Aufnehmen eines Reduktionsmittels, z. B. einer wässrigen Harnstofflösung, ausgebildet. Das Reduktionsmittel kann einer Abgasnachbehandlungsvorrichtung 26 (schematisch in Figur 4 angedeutet), vorzugsweise zur Reduktion von Stickoxiden, zugeführt werden. Die Abgasnachbehandlungsvorrichtung 26 kann bspw. einen Oxidationskatalysator, einen Partikelfilter und/oder eine SCR-Abgasnachbehandlungsvorrichtung (SCR = selektive katalytische Reduktion) aufweisen.

Der Freiraum zwischen dem Fahrzeugrahmen 12 und der Arbeitsplattform 20 kann beispielsweise ein Tankvolumen des Tanks 24 in einem Bereich zwischen 40 I und 100 I, vorzugsweise zwischen 50 I und 90 I, besonders bevorzugt zwischen 60 I und 80 I, ermöglichen. Im Bereich zwischen einer Oberseite des Fahrzeugrahmens 12 und einer Unterseite der Arbeitsplattform 20 kann der Tank 24 eine Höhe in einem Bereich zwischen 5 cm und 20 cm, vorzugsweise zwischen 7 cm und 15 cm, besonders bevorzugt rund 10 cm, aufweisen.

Der Tank 24 ist teilweise zwischen einer Oberseite des Fahrzeugrahmens 12 und einer Unterseite der Arbeitsplattform 20 angeordnet. Eine Form des Tanks 24 ist an eine Form der Arbeitsplattform 20 angepasst. Zweckmäßig deckt die Arbeitsplattform 20 den Tank 24 zumindest bereichsweise ab.

Vorzugsweise weist der Tank 24 einen quaderförmigen Bereich zwischen der Arbeitsplattform 20 und dem Fahrzeugrahmen 12 auf. Eine Oberseite des quaderförmigen Bereichs kann direkt unterhalb der Unterseite der Arbeitsplattform 20 angeordnet sein. Eine Unterseite des quaderförmigen Bereichs kann direkt oberhalb der Oberseite des Fahrzeugrahmens 12 angeordnet sein. Der quaderförmige Bereich des Tanks 24 kann zumindest teilweise (z. B. einseitig, zweiseitig, dreiseitig oder vierseitig) bündig mit der Arbeitsplattform 20 abschließen.

Der Tank 24 kann elastisch auf dem Fahrzeugrahmen 12 abgestützt sein oder aufliegen. Bspw. können Gummipuffer zwischen dem Tank 24 und einer Oberseite des Fahrzeugrahmens 12 angeordnet sein. Der Tank 24 kann an dem Fahrzeugrahmen 12 angebracht sein. Bspw. kann der Tank 24 an dem Fahrzeugrahmen 12 angeschraubt und/oder auf den Fahrzeugrahmen 12 aufgesteckt sein. Es ist auch möglich, den Tank 24 zum Beispiel mittels Schrauben oder Anstecken an der Arbeitsplattform 20 anzubringen, zum Beispiel an einer Trittstufe der Arbeitsplattform 20.

Die Arbeitsplattform 20 ist zweckmäßig so an dem Fahrzeugrahmen 12 abgestützt, dass beim Begehen der Arbeitsplattform 20 eine Beschädigung des Tanks 24 verhindert wird. Zweckmäßig ist die Arbeitsplattform 20 so an dem Fahrzeugrahmen 12 abgestützt, dass sie bei Belastung nicht auf einen bspw. mit Reduktionsmittel gefüllten Hohlraum des Tanks 24 einwirkt. Somit muss der Tank 24 nicht derart stabil konstruiert sein, dass er einer Belastung durch eine oder mehrere auf der Arbeitsplattform 20 stehenden Personen widersteht.

Beispielsweise können Schraubdome verwendet werden. Die Schraubdome können mit dem Fahrzeugrahmen 12 verbunden sein. Die Schraubdome können beispielsweise in Ausnehmungen (z. B. Durchgangslöcher oder Domabschnitte) des Tanks 24 angeordnet sein. Die Arbeitsplattform 20 kann mit den Schraubdomen lösbar verschraubt sein.

Der Tank 24 kann eine Pumpe 28 (siehe Figur 2), vorzugsweise eine Reduktionsmittelpumpe, aufweisen. Es ist möglich, dass der Tank 24 einen erweiterten Bereich aufweist, in dem die Pumpe 28 aufgenommen ist. Der erweiterte Bereich kann bspw. nicht von der Arbeitsplattform 20 abgedeckt sein. Stattdessen kann der erweiterte Bereich in einer Vertikalrichtung nach oben über die Arbeitsplattform 20 überstehen. Der erweiterte Bereich kann ein Bereich des Tanks 24 sein, der bezüglich einer Vorwärtsfahrrichtung des Kraftfahrzeugs 10 über die Arbeitsplattform 20 in einer Richtung zu der Rückwand 16 übersteht. Der erweiterte Bereich kann sich beispielsweise an den quaderförmigen Bereich des Tanks 24 zwischen der Arbeitsplattform 20 und dem Fahrzeugrahmen 12 anschließen. Der erweiterte Bereich kann bspw. Bauraum für die Pumpe 28 schaffen und/oder eine Volumenvergrößerung des Tanks 24 ermöglichen. Der erweiterte Bereich kann bspw. selbst quaderförmig sein.

Der Tank 24 kann einen (liegenden) L-förmigen Querschnitt bezüglich einer Vertikalebene, in der eine Längsachse des Kraftfahrzeugs 10 verläuft, aufweisen. Der lange Schenkel des L-förmigen Querschnitts kann durch den quaderförmigen Bereich des Tanks 24 zwischen der Arbeitsplattform 20 und dem Fahrzeugrahmen 12 gebildet sein. Der kurze Schenkel des L-förmigen Querschnitts kann durch den erweiterten Bereich des Tanks 24, der über die Arbeitsplattform 20 übersteht, gebildet sein.

Es ist auch möglich, dass der Tank 24 mindestens einen erweiterten Bereich aufweist, der in einer Vertikalrichtung nach unten über eine Oberkante oder Oberseite des Fahrzeugrahmens 12 übersteht (nicht dargestellt), insbesondere zwischen den Längsträgern des Fahrzeugrahmens 12. Bspw. könnte der Tank 24 einen erweiterten Bereich aufweisen, der sich einseitig parallel zum ersten Längsträger des Fahrzeugrahmens 12 erstreckt. Auch könnten zwei erweiterte Bereiche vorgesehen sein, die sich beidseitig parallel zum ersten und zweiten Längsträger erstrecken, wobei vorzugsweise mittig (bezüglich einer Querrichtung des Kraftfahrzeugs 10) zwischen den erweiterten Bereichen bspw. Bauraum für einen Abschnitt des Antriebsstrangs verbleiben kann, d.h. kein erweiterter Bereich vorgesehen ist. Die Pumpe 28 könnte auch in einem dieser erweiterten Bereiche aufgenommen sein.

Der Tank 24 der Ausführungsform der Figuren 1 bis 4 ist bezüglich einer Querrichtung des Kraftfahrzeugs 10 zentral bzw. mittig hinter dem Fahrerhaus 14 angeordnet. Die Arbeitsplattform 20 ist gestuft ausgeführt. Eine erste Ebene der Arbeitsplattform 20 ist neben dem Tank 24 angeordnet. Die erste Ebene ist auf Höhe einer Unterseite des Tanks 24 angeordnet. Eine zweite Ebene ist auf dem Tank 24 angeordnet und zweckmäßig an eine Form des Tanks 24, insbesondere an eine Form des quaderförmigen Bereichs des Tanks 24, angepasst.

Die Abgasnachbehandlungsvorrichtung 26 (siehe Figur 4) kann neben dem Tank 24 an dem Fahrzeugrahmen 12 angebracht sein. Vorzugsweise ist der Tank 24 nicht oberhalb der Abgasnachbehandlungsvorrichtung 26 angeordnet. Stattdessen kann der Tank 24 vorzugsweise bezüglich derjenigen Außenseite des Fahrzeugrahmens 12, an der die Abgasnachbehandlungsvorrichtung 26 angeordnet ist, im Wesentlichen bündig mit dem Fahrzeugrahmen 12 abschließen. Damit kann bspw. eine negative Beeinflussung des Fluids in dem Tank 24 durch Abwärme der Abgasnachbehandlungsvorrichtung 26 verhindert werden. Es ist nämlich möglich, dass eine Oberflächentemperatur der Abgasnachbehandlungsvorrichtung 26 im Betrieb bis zu beispielsweise 400°C ansteigen kann.

Es ist möglich, dass zwischen dem Tank 24 und der Abgasnachbehandlungsvorrichtung 26 eine thermische Isolierung, zum Beispiel eine Wärmedämmung, angeordnet ist.

Der Tank 24 ist in Fluidverbindung mit der Abgasnachbehandlungsvorrichtung 26, um Reduktionsmittel aus dem Tank 24 zu der Abgasnachbehandlungsvorrichtung 26 zuzuführen. Das Reduktionsmittel kann in der Abgasnachbehandlungsvorrichtung 26 in das strömende Abgas eingespritzt bzw. eingesprüht werden.

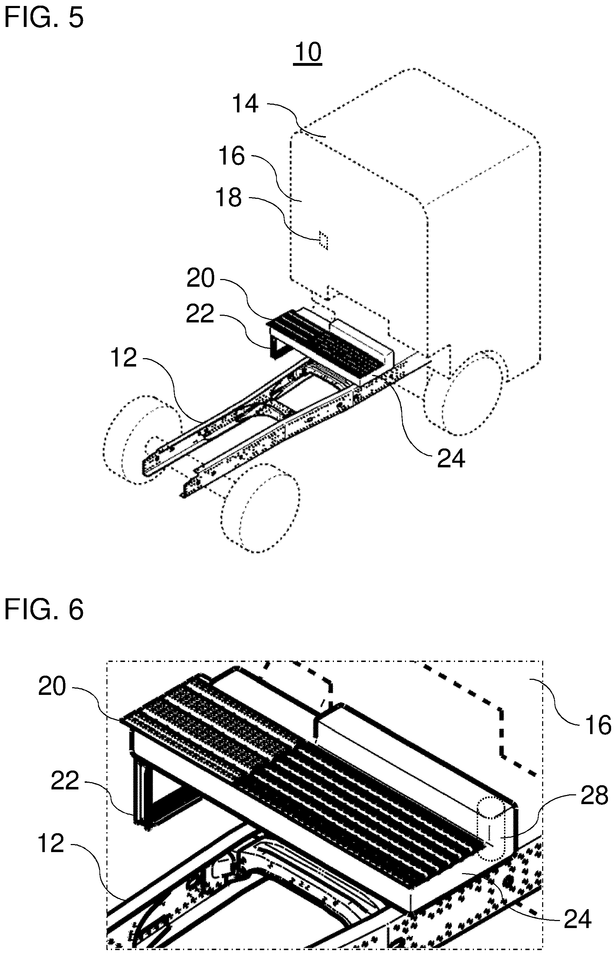

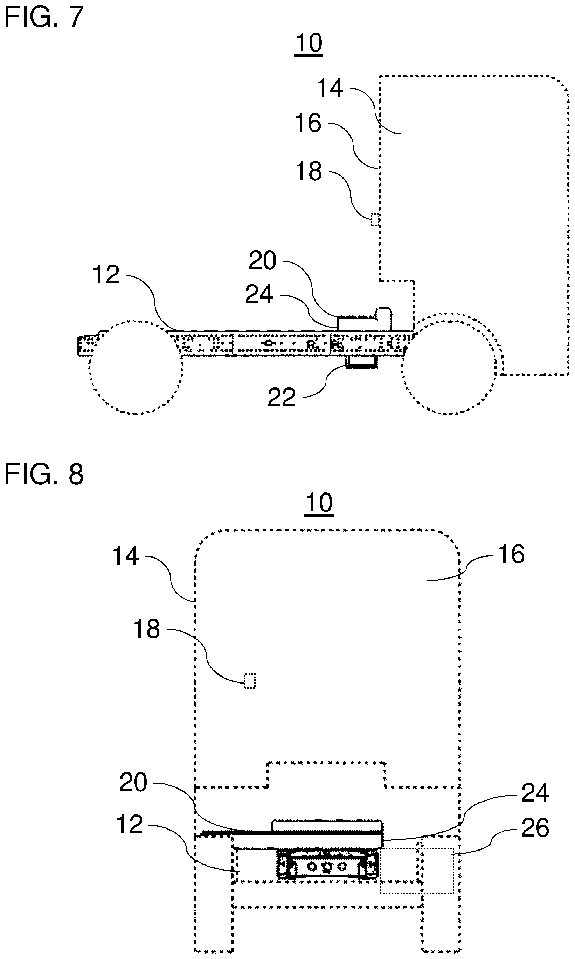

Die Figuren 5 bis 8 zeigen ein weiteres Ausführungsbeispiel.

Der Tank 24 ist im weiteren Ausführungsbeispiel der Figuren 5 bis 8 größer als der Tank 24 des Kraftfahrzeugs aus den Figuren 1 bis 4. Dies kann durch eine einseitige (oder mehrseitige)

Verlängerung des Tanks 24 in einer Querrichtung des Kraftfahrzeugs 10 über den Fahrzeugrahmen 12 hinaus ermöglicht sein. Der Tank 24 ist somit mittig hinter und an lediglich einer Außenseite hinter der Rückwand 16 des Fahrerhauses 14 angeordnet. Die Arbeitsplattform 20 ist eben bzw. stufenlos und überdeckt den Tank 24 im Wesentlichen. Es ist auch möglich, dass der Tank 24 alternativ oder zusätzlich an der anderen Außenseite verlängert ist. Ebenso kann der Tank 24 bspw. verbreitert werden, um ein Volumen des Tanks 24 zu erhöhen.

Auch wenn hierin das besonders bevorzugte Ausführungsbeispiel, bei dem der Tank 24 als Reduktionsmitteltank ausgeführt ist, dargestellt und beschrieben ist, wird darauf hingewiesen, dass der Tank 24 prinzipiell auch zum Bevorraten anderer Fluide (z. B. flüssiger oder gasförmiger Kraftstoff, Druckluft usw.) eingesetzt werden könnte.

Die Erfindung ist nicht auf die vorstehend beschriebenen bevorzugten Ausführungsbeispiele beschränkt. Vielmehr ist eine Vielzahl von Varianten und Abwandlungen möglich, die ebenfalls von dem Erfindungsgedanken Gebrauch machen und deshalb in den Schutzbereich fallen. Insbesondere beansprucht die Erfindung auch Schutz für den Gegenstand und die Merkmale der Unteransprüche unabhängig von den in Bezug genommenen Ansprüchen. Insbesondere sind die einzelnen Merkmale des unabhängigen Anspruchs 1 jeweils unabhängig voneinander offenbart. Zusätzlich sind auch die Merkmale der Unteransprüche unabhängig von sämtlichen Merkmalen des unabhängigen Anspruchs 1 und beispielsweise unabhängig von den Merkmalen bezüglich des Vorhandenseins und/oder der Konfiguration des Fahrzeugrahmens, des Fahrerhauses, der Arbeitsplattform und/oder des Tanks des unabhängigen Anspruchs 1 offenbart. Alle Bereichsangaben hierin sind derart offenbart zu verstehen, dass gleichsam alle in den jeweiligen Bereich fallenden Werte einzeln offenbart sind, z. B. auch als jeweils bevorzugte engere Außengrenzen des jeweiligen Bereichs.

### Bezugszeichenliste

- 10: Kraftfahrzeug
- 12: Fahrzeugrahmen
- 14: Fahrerhaus
- 16: Rückwand
- 18: Anschluss
- 20: Arbeitsplattform
- 22: Trittleiter
- 24: Tank
- 26: Abgasnachbehandlungsvorrichtung
- 28: Pumpe

## Patentansprüche

1. Kraftfahrzeug (10), vorzugsweise Nutzfahrzeug, besonders bevorzugt Lastkraftwagen, aufweisend:
einen Fahrzeugrahmen (12);
ein Fahrerhaus (14);
eine Arbeitsplattform (20), die fahrerhausrückseitig oberhalb des Fahrzeugrahmens (12) angeordnet ist; und
einen Tank (24), vorzugweise einen Reduktionsmitteltank, der zwischen der Arbeitsplattform (20) und dem Fahrzeugrahmen (12) angeordnet ist,
**dadurch gekennzeichnet,**
**dass** der Tank (24) elastisch auf dem Fahrzeugrahmen (12) abgestützt ist oder aufliegt und
**dass** der Tank (24) mindestens eine Ausnehmung, vorzugsweise ein Durchgangsloch oder einen Domabschnitt, aufweist, durch die hindurch die Arbeitsplattform (20) an dem Fahrzeugrahmen (12) abgestützt ist.

2. Kraftfahrzeug (10) nach Anspruch 1, wobei:
der Tank (24) fahrerhausrückseitig und/oder oberhalb von dem Fahrzeugrahmen (12) angeordnet ist; und/oder
der Tank (24) zwischen einer Unterseite der Arbeitsplattform (20) und einer Oberseite des Fahrzeugrahmens (12) angeordnet ist.

3. Kraftfahrzeug (10) nach Anspruch 1 oder Anspruch 2, wobei:
der Tank (24) elastisch auf dem Fahrzeugrahmen (12) abgestützt ist oder aufliegt, nämlich mittels Gummipuffer; und/oder
der Tank (24) an der Arbeitsplattform (20), vorzugsweise von unten und/oder seitlich an einer Trittstufe der Arbeitsplattform (20), und/oder dem Fahrzeugrahmen (12), vorzugsweise von oben, angebracht ist.

4. Kraftfahrzeug (10) nach einem der vorherigen Ansprüche, wobei:
eine Form des Tanks (24) an eine Form der Arbeitsplattform (20) angepasst ist.

5. Kraftfahrzeug (10) nach einem der vorherigen Ansprüche, wobei:
die Arbeitsplattform (20) den Tank (24) abdeckt, vorzugsweise größtenteils, im Wesentlichen oder vollständig.

6. Kraftfahrzeug (10) nach einem der vorherigen Ansprüche, wobei:
die Arbeitsplattform (20) an dem Fahrzeugrahmen (12) abgestützt ist, vorzugsweise direkt, mittels mindestens eines Schraubdoms und/oder ohne Zwischenschaltung eines Hohlraums des Tanks (24).

7. Kraftfahrzeug (10) nach einem der vorherigen Ansprüche, wobei:
der Tank (24) ein Volumen in einem Bereich zwischen 40 I und 100 I, vorzugweise zwischen 50 I und 90 I, besonders bevorzugt zwischen 60 I und 80 I, aufweist; und/oder
der Tank (24) in einem Abschnitt zwischen der Arbeitsplattform (20) und dem Fahrzeugrahmen (12) eine Höhe in einem Bereich zwischen 5 cm und 20 cm, vorzugsweise zwischen 7 cm und 15 cm, besonders bevorzugt rund 10 cm, aufweist.

8. Kraftfahrzeug (10) nach einem der vorherigen Ansprüche, wobei:
die Arbeitsplattform (20) eine im Westlichen rechteckförmige Form aufweist, begehbar ist und/oder horizontal ausgerichtet ist.

9. Kraftfahrzeug (10) nach einem der vorherigen Ansprüche, wobei:
der Tank (24) bezüglich einer Querrichtung des Kraftfahrzeugs (10) mittig angeordnet ist; oder
der Tank (24) bezüglich einer Querrichtung des Kraftfahrzeugs (10) mittig und au-ßenseitig angeordnet ist.

10. Kraftfahrzeug (10) nach einem der vorherigen Ansprüche, wobei:
der Tank (24) an einer dem Fahrerhaus (14) zugewandten Seite des Tanks (24) über die Arbeitsplattform (20) übersteht; und/oder
der Tank (24) entgegen einer Vorwärtsfahrrichtung des Kraftfahrzeugs (10) im Wesentlichen bündig mit der Arbeitsplattform (20) abschließt.

11. Kraftfahrzeug (10) nach einem der vorherigen Ansprüche, wobei:
der Tank (24) zumindest einseitig bezüglich einer Querrichtung des Kraftfahrzeugs (10) im Wesentlichen bündig mit dem Fahrzeugrahmen (12) und/oder der Arbeitsplattform (20) abschließt; und/oder
der Tank (24) zumindest einseitig bezüglich einer Querrichtung des Kraftfahrzeugs (10) über den Fahrzeugrahmen (12) übersteht.

12. Kraftfahrzeug (10) nach einem der vorherigen Ansprüche, wobei:
ein Bereich des Tanks (24) sich bezüglich einer Vertikalrichtung nach oben über die Arbeitsplattform (20) hinaus erstreckt, vorzugsweise an einer dem Fahrerhaus (14) zugewandten Seite des Tanks (24); und/oder
ein Bereich des Tanks (24) sich bezüglich einer Vertikalrichtung nach unten über eine Oberseite des Fahrzeugrahmens (12) hinaus erstreckt, vorzugsweise zwischen Längsträgern des Fahrzeugrahmens (12).

13. Kraftfahrzeug (10) nach Anspruch 12, wobei:
in dem Bereich des Tanks (24) zumindest teilweise eine Pumpe (28) aufgenommen ist.

14. Kraftfahrzeug (10) nach einem der vorherigen Ansprüche, wobei:
der Tank (24) einen L-förmigen Querschnitt aufweist,
wobei vorzugsweise:
der kurze Schenkel der L-Form dem Fahrerhaus (14) zugewandt ist und/oder der lange Schenkel der L-Form zwischen der Arbeitsplattform (20) und dem Fahrzeugrahmen (12) angeordnet ist.

15. Kraftfahrzeug (10) nach einem der vorherigen Ansprüche, ferner aufweisend:
mindestens einen, vorzugsweise elektrischen, hydraulischen oder pneumatischen, Anschluss (18), der fahrerhausrückseitig angeordnet und mittels der Arbeitsplattform (20) zugängig ist; und/oder
eine Abgasnachbehandlungsvorrichtung (26), vorzugsweise aufweisend eine SCR- Abgasnachbehandlungsvorrichtung, wobei der Tank (24) in Fluidverbindung mit der Abgasnachbehandlungsvorrichtung steht, vorzugsweise zum Zuführen von Reduktionsmittel.

## Claims

1. A motor vehicle (10), preferably a commercial vehicle, particularly preferably a truck, comprising
a vehicle frame (12);
a driver's cab (14);
a working platform (20), which is arranged at the rear of the cab above the vehicle frame (12); and
a tank (24), preferably a reducing agent tank, which is arranged between the working platform (20) and the vehicle frame (12),
**characterized in**
**that** the tank (24) is elastically supported or rests on the vehicle frame (12), and
**that** the tank (24) comprises at least one recess, preferably a through hole or a dome section, through which the working platform (20) is supported on the vehicle frame (12).

2. The motor vehicle (10) according to claim 1, wherein:
the tank (24) is arranged at the rear of the cab and/or above the vehicle frame (12); and/or
the tank (24) is arranged between an underside of the working platform (20) and an upper side of the vehicle frame (12).

3. The motor vehicle (10) according to claim 1 or claim 2, wherein:
the tank (24) is elastically supported or rests on the vehicle frame (12), namely by means of rubber buffers; and/or
the tank (24) is attached to the working platform (20), preferably from below and/or laterally to a step of the working platform (20), and/or to the vehicle frame (12), preferably from above.

4. The motor vehicle (10) according to any one of the preceding claims, wherein:
a shape of the tank (24) is adapted to a shape of the working platform (20).

5. The motor vehicle (10) according to any one of the preceding claims, wherein:
the working platform (20) covers the tank (24), preferably for the most part, substantially or completely.

6. The motor vehicle (10) according to any one of the preceding claims, wherein:
the working platform (20) is supported on the vehicle frame (12), preferably directly, by means of at least one screw dome and/or without interposing a cavity of the tank (24).

7. The motor vehicle (10) according to any one of the preceding claims, wherein:
the tank (24) comprises a volume in a range between 40 I and 100 I, preferably between 50 I and 90 I, particularly preferably between 60 I and 80 I; and/or
the tank (24) comprises, in a section between the working platform (20) and the vehicle frame (12), a height in a range between 5 cm and 20 cm, preferably between 7 cm and 15 cm, particularly preferably around 10 cm.

8. The motor vehicle (10) according to any one of the preceding claims, wherein:
the working platform (20) comprises a substantially rectangular shape, can be walked on and/or is horizontally oriented.

9. The motor vehicle (10) according to any one of the preceding claims, wherein:
the tank (24) is arranged centrally with respect to a transverse direction of the motor vehicle (10); or
the tank (24) is arranged centrally and outwardly with respect to a transverse direction of the motor vehicle (10).

10. The motor vehicle (10) according to any one of the preceding claims, wherein:
the tank (24) protrudes beyond the working platform (20) on a side of the tank (24) facing the driver's cab (14); and/or
the tank (24) is substantially flush with the working platform (20) against a forward driving direction of the motor vehicle (10).

11. The motor vehicle (10) according to any one of the preceding claims, wherein:
the tank (24) is substantially flush with the vehicle frame (12) and/or the working platform (20) at least on one side with respect to a transverse direction of the motor vehicle (10); and/or
the tank (24) protrudes beyond the vehicle frame (12) at least on one side with respect to a transverse direction of the motor vehicle (10).

12. The motor vehicle (10) according to any one of the preceding claims, wherein:
a region of the tank (24) extends upwardly beyond the working platform (20) with respect to a vertical direction, preferably on a side of the tank (24) facing the driver's cab (14); and/or
a region of the tank (24) extends downwards with respect to a vertical direction beyond an upper side of the vehicle frame (12), preferably between longitudinal members of the vehicle frame (12).

13. The motor vehicle (10) according to claim 12, wherein:
a pump (28) is at least partially accommodated in the region of the tank (24).

14. The motor vehicle (10) according to any one of the preceding claims, wherein:
the tank (24) comprises an L-shaped cross-section,
wherein preferably:
the short leg of the L-shape faces the driver's cab (14) and/or the long leg of the L-shape is arranged between the working platform (20) and the vehicle frame (12).

15. The motor vehicle (10) according to any one of the preceding claims, further comprising:
at least one, preferably electrical, hydraulic or pneumatic, connection (18) arranged at the rear of the cab and accessible by means of the working platform (20); and/or
an exhaust gas aftertreatment device (26), preferably comprising an SCR exhaust gas aftertreatment device, wherein the tank (24) is in fluid connection with the exhaust gas aftertreatment device, preferably for supplying reducing agent.

## Revendications

1. Véhicule automobile (10), de préférence véhicule utilitaire, de manière particulièrement préférée camion, comportant :
un châssis de véhicule (12) ;
une cabine de conducteur (14) ;
une plate-forme de travail (20) qui est disposée à l'arrière de la cabine de conducteur au-dessus du châssis de véhicule (12) ; et
un réservoir (24), de préférence un réservoir d'agent réducteur, qui est disposé entre la plate-forme de travail (20) et le châssis de véhicule (12),
**caractérisé en ce que**
le réservoir (24) s'appuie ou repose élastiquement sur le châssis de véhicule (12) et
le réservoir (24) comporte au moins un évidement, de préférence un trou traversant ou une portion bombée, par le biais duquel la plate-forme de travail (20) s'appuie sur le châssis de véhicule (12).

2. Véhicule automobile (10) selon la revendication 1 :
le réservoir (24) étant disposé à l'arrière de la cabine de conducteur et/ou au-dessus du châssis de véhicule (12) ; et/ou
le réservoir (24) étant disposé entre un côté inférieur de la plate-forme de travail (20) et un côté supérieur du châssis de véhicule (12).

3. Véhicule automobile (10) selon la revendication 1 ou la revendication 2 :
le réservoir (24) s'appuyant ou reposant élastiquement sur le châssis de véhicule (12), notamment au moyen de tampons en caoutchouc ; et/ou
le réservoir (24) étant fixé à la plate-forme de travail (20), de préférence depuis le bas et/ou latéralement à une marche de la plate-forme de travail (20), et/ou au châssis de véhicule (12), de préférence depuis le haut.

4. Véhicule automobile (10) selon l'une des revendications précédentes :
la forme du réservoir (24) étant adaptée à la forme de la plate-forme de travail (20).

5. Véhicule automobile (10) selon l'une des revendications précédentes :
la plate-forme de travail (20) recouvrant le réservoir (24), de préférence en grande partie, sensiblement ou complètement.

6. Véhicule automobile (10) selon l'une des revendications précédentes :
la plate-forme de travail (20) s'appuyant sur le châssis de véhicule (12), de préférence directement, au moyen d'au moins une vis à tête bombée et/ou sans interposition d'une cavité du réservoir (24).

7. Véhicule automobile (10) selon l'une des revendications précédentes :
le réservoir (24) ayant un volume dans une gamme comprise entre 40 1 et 100 1, de préférence entre 50 1 et 90 l, de manière particulièrement préférée entre 60 l et 80 l ; et/ou
le réservoir (24) ayant dans une portion comprise entre la plate-forme de travail (20) et le châssis de véhicule (12) une hauteur comprise entre 5 cm et 20 cm, de préférence entre 7 cm et 15 cm, de manière particulièrement préférée autour de 10 cm.

8. Véhicule automobile (10) selon l'une des revendications précédentes :
la plate-forme de travail (20) ayant une forme sensiblement rectangulaire, étant praticable à pied et/ou étant orientée horizontalement.

9. Véhicule automobile (10) selon l'une des revendications précédentes :
le réservoir (24) étant disposé centralement par rapport à une direction transversale du véhicule automobile (10) ; ou
le réservoir (24) étant disposé centralement et à l'extérieur par rapport à une direction transversale du véhicule automobile (10).

10. Véhicule automobile (10) selon l'une des revendications précédentes :
le réservoir (24) faisant saillie de la plate-forme de travail (20) sur un côté du réservoir (24) qui est dirigé vers la cabine de conducteur (14) ; et/ou
le réservoir (24) se terminant sensiblement à fleur de la plate-forme de travail (20) dans le sens opposé au sens de déplacement en avant du véhicule automobile (10).

11. Véhicule automobile (10) selon l'une des revendications précédentes :
le réservoir (24) se terminant sensiblement à fleur du châssis de véhicule (12) et/ou de la plate-forme de travail (20) au moins d'un côté par rapport à une direction transversale du véhicule automobile (10) ; et/ou
le réservoir (24) faisant saillie du châssis de véhicule (12) au moins d'un côté par rapport à une direction transversale du véhicule automobile (10).

12. Véhicule automobile (10) selon l'une des revendications précédentes :
une zone du réservoir (24) s'étendant vers le haut dans une direction verticale au-delà de la plate-forme de travail (20), de préférence sur un côté du réservoir (24) qui est dirigé vers la cabine de conducteur (14) ; et/ou
une zone du réservoir (24) s'étendant vers le bas dans une direction verticale au-delà d'un côté supérieur du châssis de véhicule (12), de préférence entre des longerons du châssis de véhicule (12).

13. Véhicule automobile (10) selon la revendication 12 :
une pompe (28) étant au moins partiellement logée dans la zone du réservoir (24).

14. Véhicule automobile (10) selon l'une des revendications précédentes :
le réservoir (24) ayant une section transversale en forme de L,
de préférence :
la branche courte de la forme en L étant dirigée vers la cabine de conducteur (14) et/ou la branche longue de la forme en L étant disposée entre la plate-forme de travail (20) et le châssis de véhicule (12).

15. Véhicule automobile (10) selon l'une des revendications précédentes, comportant en outre :
au moins un raccord (18), de préférence électrique, hydraulique ou pneumatique, disposé à l'arrière de la cabine de conducteur et accessible au moyen de la plate-forme de travail (20) ; et/ou
un dispositif de post-traitement de gaz d'échappement (26), comportant de préférence un dispositif de post-traitement de gaz d'échappement SCR, le réservoir (24) étant en communication fluidique avec le dispositif de post-traitement de gaz d'échappement, de préférence pour fournir un agent réducteur.
